Europäisches Patentamt

**European Patent Office**

Office européen des brevets

(11) Publication number: **0 296 871**
**A2**

## (12) EUROPEAN PATENT APPLICATION

(21) Application number: **88305773.9**

(22) Date of filing: **24.06.88**

(51) Int. Cl.⁴: **G01N 27/00 , H01J 37/28**

(30) Priority: **25.06.87 JP 158571/87**

(43) Date of publication of application:
**28.12.88 Bulletin 88/52**

(84) Designated Contracting States:
**CH DE FR GB LI**

(71) Applicant: **SEIKO INSTRUMENTS INC.**
**31-1, Kameido 6-chome Koto-ku**
**Tokyo 136(JP)**

(72) Inventor: **Sakuhara, Toshihiko**
**31-1, Kameido 6-chome**
**Koto-ku Tokyo(JP)**
Inventor: **Uchiyama, Tetsuo**
**31-1, Kameido 6-chome**
**Koto-ku Tokyo(JP)**
Inventor: **Sakai, Fumiki**
**31-1, Kameido 6-chome**
**Koto-ku Tokyo(JP)**

(74) Representative: **Miller, Joseph et al**
**J. MILLER & CO. Lincoln House 296-302 High**
**Holborn**
**London WC1V 7JH(GB)**

(54) **Tunnelling scanning microscope.**

(57) A tunnelling scanning microscope comprising a probe (8) having a fine conductive tip; means (6,7) for positioning the tip of said probe (8) sufficiently close to a surface of a sample (5) to be investigated so that tunnelling current flows; means (13) for scanning across said sample surface with the tip of said probe (8); means (14) for automatically controlling the distance between the tip of said probe (8) and said sample surface during scanning in response to measured tunnel current; and display means for producing an image of the configuration of the sample surface characterised in that a light source (9) is provided for irradiating the sample surface.

Fig. 1

## TUNNELLING SCANNING MICROSCOPE

The present invention relates to a tunnelling scanning microscope and, although it is not so restricted, it relates particularly to a tunnelling scanning microscope which is capable of investigating the surface structure of a material of low electrical conductivity including inorganic compounds and photo-conductive organic materials.

A scanning tunnelling microscope is disclosed for example, in US-A-4,343,993. A scanning tunnelling microscope is an apparatus by means of which the surface structure of conductive materials such as metals can be observed to the order of magnitude of an atom. When a voltage is applied between a conductive material and a conductive tip of a probe of the microscope and they are closely brought together to a position in which they are approximately 1 nm apart, tunnelling currents flow therebetween. The tunnelling currents change sensitively in response to extremely fine distance changes, thereby enabling the observation of the surface structure to the order of the magnitude of an atom.

In a tunnelling scanning microscope, changes of the tunnelling current in response to a change in the distance between the conductive tip and the surface of the conductive material have to be large in order to produce a high resolution image of the surface structure of the conductive material. Since higher conductivity of a sample material means higher sensitivity and higher resolution, materials of low conductivity including organic compounds, photo-conductive organic materials, inorganic compounds etc., result in poor resolution or difficulty in surface investigation. Therefore the range of materials applicable to observation by tunnelling scanning microscopes has been limited. For example, the surface investigation of organic materials, most of which are of low conductivity, represents such difficulties.

In the past, the surface image of an organic material has been obtained by observing a metal layer which is deposited on the organic material by evaporation or sputtering. In this case, however, there is a possibility that there will be changes of the surface structure of the organic material during deposition of metal thereon, and therefore it is desirable to provide investigation without metal deposition.

According to the present invention, there is provided a tunnelling scanning microscope comprising a probe having a fine conductive tip; means for positioning the tip of said probe sufficiently close to a surface of a sample to be investigated so that tunnelling current flows; means for scanning across said sample surface with the tip of said probe; means for automatically controlling the distance between the tip of said probe and said sample surface during scanning in response to measured tunnel current; and display means for producing an image of the configuration of the sample surface characterised in that a light source is provided for irradiating the sample surface.

There may be control means for controlling the wavelength of the irradiated light. The said control means may comprise two monochromators which are adapted to ensure correction of the wavelength and band-pass of the irradiated light.

The invention makes use of the fact that certain materials increase their conductivities under light irradiation. Materials which increase their conductivity with light irradiation are listed hereunder. Among single elements, such materials are Si, P, S, Ge, As and I. Among inorganic compounds, $ZnS$, $CdS$, $As_2S_3$, $PbS$, $Bi_2S_3$, $Ag_2S$, $MoS_2$, $HgS$, $Tl_2S$, $GeS$, $Sb_2S$, $ZnSe$, $CdSe$, $PbSe$, $Bi_2Se_3$, $ZnTe$, $CdTe$, $PbTe$, $Bi_2Te_3$, $Cu_2Te$, $Ag_2Te$, $HgTe$, $Tl_2Te$, $Sb_2Te$, $Mo_2Te$, $W_2Te$, $U_2Te$, $ZnO$, $PbO$, $HgO$, $PbCrO_4$, $Cu_2O$, $PbMoO_4$, $MgO$, $BaO$, $TiO_2$, $InSb$, $InAs$, $InP$, $GaSb$, $GaAs$, $GaP$, $AlSb$, $AlAs$, $AlP$, $Cd_3As$, $InSe$, $InTe$, $InO$, $Mg_3Sb_2$, $TlBr$, $HgI_2$, $TlI$, F-centred alkali halides $Zn_3P_2$, $ZnSb$, $Cd_3As_2$, $Mg_2Bi$, $Mg_2Ge$, and $Mg_2Sn$. All photoconductive organic materials can produce high resolution images by the apparatus of the present invention. There are a wide variety of such materials. However, a short list of such materials includes, for example, polyacetylene in linear conjugated polymers; polyparaphenylensulfide in high polymer cyclic conjugate; polypyrrole composed of heterocyclics; so called PVK-TNF composed of poly-N-vinylcarbazole (PVK) and 2, 4, 7-trinitrofluorene (TNF) in polymer charge-transfer complexes; various aromatic compounds such as tetracene, dyes, pigments, and charge-transfer complexes in low molecular compounds; phthalocyanine which is typical of dye semiconductors such as dyes and pigments; vanadylphthalocyanine, alumiphthalocyanine chloride, gallium phthalocyanine, chloro indiumphthalocyanine chloride, etc. formed by changing the central atom of phthalocyanine; chlorophyll in biomaterial; polymethine dyes such as cyanine, merocyanine and oxonol, and squalene dye, which are well known sensitizers. The above are included in P-type semiconductors. N-type semiconductive materials of this kind includes azobenzene dye, Rhodamine B which is typical of xanthene dye, and crystal violet which is typical of triphenylmethane dye.

The invention is illustrated, merely by way of example, in the accompanying drawings, in which:-

Figure 1 is a schematic illustration of one embodiment of a scanning tunnelling microscope according to the present invention;

Figure 2 is a schematic illustration of a second embodiment of a scanning tunnelling microscope according to the present invention; and

Figure 3 shows a light source and its control system which may be used in the apparatus shown in Figure 2.

Example 1

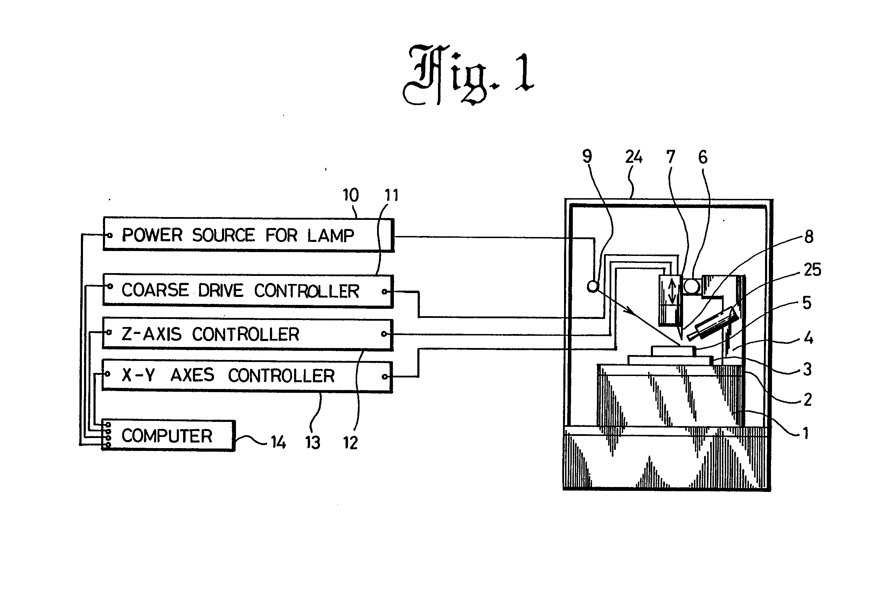

Figure 1 shows an embodiment of a scanning tunnelling microscope according to the present invention. A tunnelling unit 7 is mounted on an arm 4 which is fixed to a surface plate 2 mounted on an anti-vibration stage 1. By turning a dial 6, the tunnelling unit 7 can be moved in the vertical direction, thereby enabling coarse positioning of a probe 8 having a fine conductive tip in a Z-axis direction in relation to a sample 5. The dial 6 is adapted to effect positioning of the tip of the probe 8 sufficiently close to the surface of the sample 5 so that tunnelling current flows. Coarse positioning of the probe 8 in relation to the sample 5 in a planar direction (along X-Y axes) is carried out through the use of an X-Y stage 3 and a coarse drive controller 11.

An optical microscope 25 can be used as an aid for coarse positioning between the probe and the sample. Observation of the order of the magnitude of an atom is carried out with a lamp 9 coupled to a lamp power source 10. Such lamps may include a $D_2$ (deuterium) lamp, an Xe lamp, a halogen lamp, a tungsten lamp, and an He laser. One of those lamps is fixedly in position, or may be such that it can be changed with another lamp. Scanning across the sample surface in a planar direction is carried out through the control of three-dimension piezoelectric elements incorporated in the tunnelling unit 7 by an X-Y axes controller 13.

A constant voltage in a range between 1 and 100 mV is applied between the sample 5 and the probe 8 so as to produce a current therebetween in a range between 0.01 and 100 nA, and the probe is adjusted by a Z-axis controller 12 so that the current is maintained constant. A computer 14 controls the lamp power source 10, the coarse movement controller 11, the Z-axis controller 12 and the X-Y axes controller 13, the computer 14 automatically controlling the distance between the tip of the probe 8 and the surface of the sample 5 during scanning in response to measured tunnel current. Data obtained are processed by the computer 14 and displayed in a three-dimensional representation on means not shown, such means graphically displaying the spatial coordinates of the sample surface and producing an image of the configuration of the sample surface. All apparatus except for the power source 10, controllers 11, 12, 13 and the computer 14 are installed in a shield box 24.

By using the apparatus described above, the following photo-conductive single elements and inorganic compounds may be investigated:-Si, P, S, Ge, As, I, ZnS, CdS, $As_2S_3$, PbS, $Bi_2S_3$, ZnSe, CdSe, PbSe, $Bi_2Se_3$, ZnTe, CdTe, PbTe, $Bi_2Te_3$, $Cu_2Te$, $Ag_2Te$, HgTe, $Tl_2Te$, $Sb_2Te$, $Mo_2Te$, $W_2Te$, $U_2Te$, ZnO, PbO, HgO, $PbCrO_4$, $Cu_2O$, $PbMoO_4$, MgO, BaO, $TiO_2$, InSb, InAs, InP, GaSb, GaAs, GaP, AℓSb, AℓAs, AℓP, $Cd_3As$, InSe, InTe, InO, $Mg_3Sb_2$, TℓBr, $HgI_2$, Tℓl, F-centered alkali halides, $Zn_3P_2$, ZnSb, $Cd_3As_2$, $Mg_2Bi$, $Mg_2Ge$, and $Mg_2Sn$. All the abovementioned materials may be observed through the use of the scanning tunnelling microscope according to the present invention. As a result, atomic images can be obtained with higher resolution in comparison with images obtained without light irradiation.

An example of observations using CdS is now described. A single crystal of CdS is fixed on the X-Y stage 3 shown in Figure 1. Coarse adjustment of the CdS single crystal in the planar directions is carried out through the use of the X-Y stage 3 and the coarse drive controller 11, in which the probe 8 is close to and in near contact with the CdS while observing through the optical microscope 25. Then the lamp 9 is turned on to irradiate the CdS, the Z-axis controller 12 and the X-Y axes controller 13 are controlled by the computer 14 when the surface condition is observed to the order of the magnitude of an atom. If there is no light irradiation provided, tunnelling currents do not flow in sufficient quantity, so that only images of low resolution can be obtained. Under light irradiation, however, tunnelling currents, at a fixed voltage level, flow several tens of times more than they do without light irradiation. Thus atomic images can be investigated far more sensitively, and the obtained atomic images have a substantially higher resolution.

Further, organic compounds may be observed by the scanning tunnelling microscope of the invention under light irradiation to the order of the magnitude of an atom. There are a wide range of photo-conductive organic compounds which may be subjected to this investigation. A list of materials which may be investigated includes polyacetylene in linear conjugated polymers;polyparaphenylensulfide in ring conjugated polymers;
polypyrrole composed of heterocyclics; so called PVK-TNF composed of poly-N-vinylcarbazole (PVK) and 2,4,7-trinitrofluorene (TNF) in polymer charge-transfer complexes; various aromatic compounds such as tetracene, dyes, pigments, and charge-transfer complexes in low polymer materials; phthalocyanine which is typical of dye semiconductors such as dyes and pigments; vanadylphthalocyanine, alumiphthalocyanine chloride, gallium phthalocyanine, chloro indium phthalocyanine chloride etc. formed by changing the central atom of phthalocyanine; chlorophyll in biomaterial; polymethine dyes such as cyanine, merocyanine and oxonol, and squalene dye which are well known sensitizers. The above are included in P-type semiconductors. N-type semiconductive materials of this kind includes azobenzene dye, and crystalviolet which is typical of triphenylmethane dye. Typical photoconductive organic compounds as above mentioned have been investigated. The surface conditions in all the cases were observed under light irradiation, and as a result, highly sensitive observation of atomic images has become possible.

Example 2

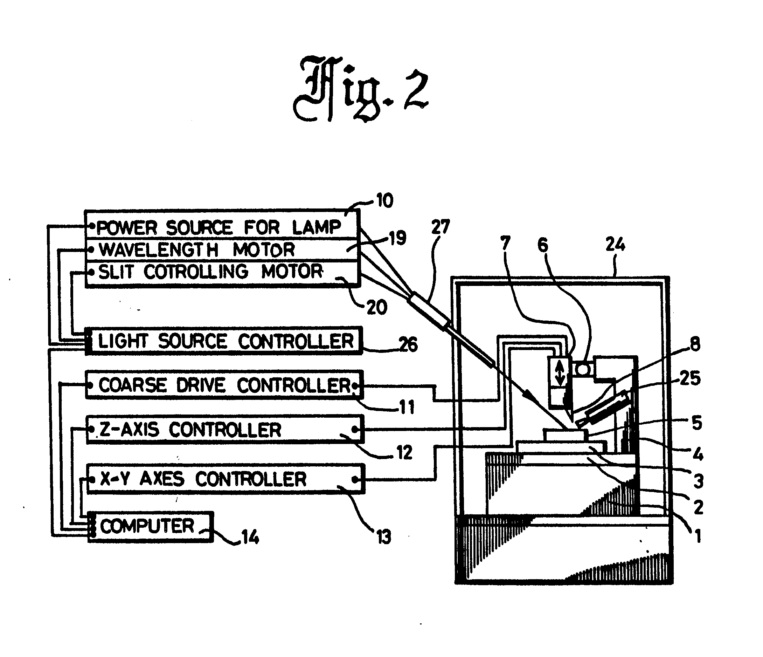

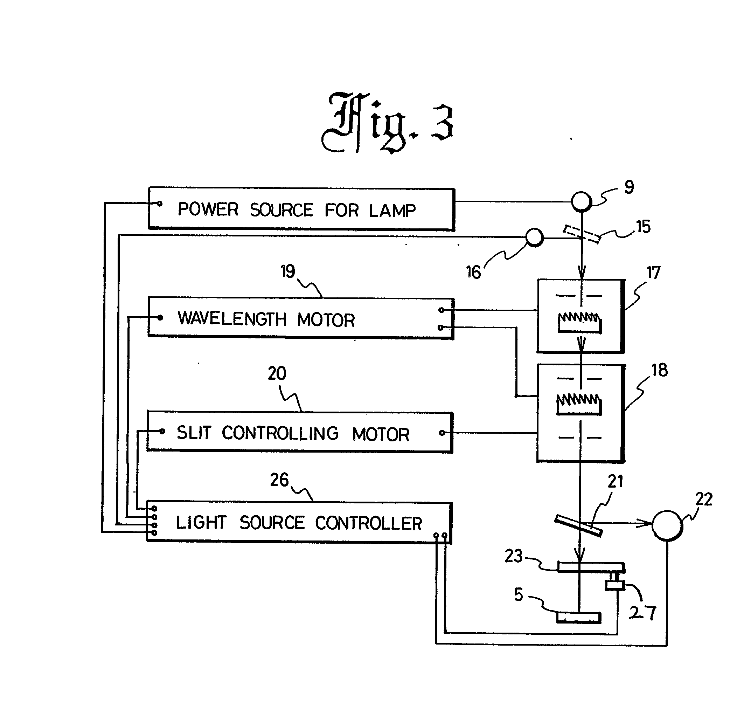

Figure 2 shows a scanning tunnelling microscope according to the invention which is capable of scanning with light of a chosen wavelength. It is the same apparatus as the one in Example 1 except for a light source 27 and its control system. One example of the light source and its control system is schematically shown in Figure 3. Light emerging from a lamp 9 is transmitted through a fore-monochromator 17 and a main-monochromator 18, and irradiates a sample 5. At the initial setting stage, an insertion mirror 15 is inserted in the optical path so that light from a Hg lamp 16 for correction enters the monochromators 17, 18. Based on the emission lines of the Hg lamp, correction of wavelength and band-pass is automatically carried out with the aid of a computer which is not shown in Figure 3. A part of the light emitted from the monochromators 17, 18 is directed by a beam splitter 21 towards a monitoring detector 22. When required, a shutter 23 is placed between the monochromators 17, 18, and the sample 5 in response to a command from a light source controller 26. The light source controller 26 operates a lamp power source, the monitoring detector 22 and various driving parts: namely, wavelength motors 19 for adjusting the monochromators 17, 18 to obtain a desired wavelength, a slit controlling motor 20, the insertion mirror 15, and a rotary solenoid 27 for the shutter 23. The light source controller 26 is connected to a computer 14 (Figure 2) of the scanning tunnelling microscope.

Surface structures of all the materials listed in Example 1 can be investigated by the apparatus of Figures 2 and 3 under different wavelengths. It is possible by this apparatus to observe the atomic configurations of surfaces which are wavelength dependent.

The present invention enables photo-conductive materials which generate carriers, and therefore increase conductivity or generate electromotive forces under light irradiation, to be observed under light irradiation. It is thus possible to obtain images of surface structures of materials which are normally difficult to investigate or can only be obtained in poor resolution.

Claims

1. A tunnelling scanning microscope comprising a probe (8) having a fine conductive tip; means (6,7) for positioning the tip of said probe (8) sufficiently close to a surface of a sample (5) to be investigated so that tunnelling current flows; means (13) for scanning across said sample surface with the tip of said probe (8); means (14) for automatically controlling the distance between the tip of said probe (8) and said sample surface during scanning in response to measured tunnel current; and display means for producing an image of the configuration of the sample surface characterised in that a light source (9) is provided for irradiating the sample surface.

2. A tunnelling scanning microscope as claimed in claim 1 characterised in that there are control means (15-23) for controlling the wavelength of the irradiated light.

3. A tunnelling scanning microscope as claimed in claim 2 in which the said control means (15-23) comprises two monochromators (17,18) which are adapted to ensure correction of the wavelength and band-pass of the irradiated light.

4. A tunnelling scanning microscope comprising a probe (8) having a fine conductive tip; means (6,7) for positioning the tip of said probe (8) sufficiently close to a sample surface (5) to be investigated so that tunnelling current flows; means (13) for scanning across said sample surface with the tip of said probe (8), means (14) for automatically controlling the distance between the tip of said probe (8) and said sample surface during scanning in response to measured tunnel current; and means for graphically displaying the spatial coordinates of said sample surface and producing an image of the configuration of said sample surface characterised by a light source (9) for irradiating said sample surface.

5. A tunnelling scanning microscope as claimed in claim 4, characterised by means for producing light having a predetermined wavelength for irradiating said sample surface.

# Fig. 1

POWER SOURCE FOR LAMP

COARSE DRIVE CONTROLLER

Z-AXIS CONTROLLER

X-Y AXES CONTROLLER

COMPUTER

EP 0 296 871 A2

# Fig. 2

POWER SOURCE FOR LAMP — 10
WAVELENGTH MOTOR — 19
SLIT COTROLLING MOTOR — 20

LIGHT SOURCE CONTROLLER — 26

COARSE DRIVE CONTROLLER — 11

Z-AXIS CONTROLLER — 12

X-Y AXES CONTROLLER — 13

COMPUTER — 14

27

7  6  24

8

25

5

4

3

2

1

EP 0 296 871 A2

# Fig. 3

POWER SOURCE FOR LAMP — 9

15

16

19 — WAVELENGTH MOTOR

17

18

20 — SLIT CONTROLLING MOTOR

26 — LIGHT SOURCE CONTROLLER

21

22

23

5

27

EP 0 296 871 A2